**Europäisches Patentamt**

**European Patent Office**

**Office européen des brevets**

(11) Veröffentlichungsnummer: **0 052 327**
**B1**

(12) **EUROPÄISCHE PATENTSCHRIFT**

(45) Veröffentlichungstag der Patentschrift:
**20.06.84**

(21) Anmeldenummer: **81109586.8**

(22) Anmeldetag: **10.11.81**

(51) Int. Cl.³: **G 03 B 27/24, G 03 B 41/16**

(54) Vorrichtung zum Projizieren eines Kennzeichenbildes auf einen Film.

(30) Priorität: **14.11.80 DE 3043068**

(43) Veröffentlichungstag der Anmeldung:
**26.05.82 Patentblatt 82/21**

(45) Bekanntmachung des Hinweises auf die Patenterteilung:
**20.06.84 Patentblatt 84/25**

(84) Benannte Vertragsstaaten:
**FR GB IT NL**

(56) Entgegenhaltungen:
**DE - A - 2 710 699**
**DE - A - 2 934 986**
**DE - B - 2 412 802**
**DE - B - 2 456 448**

(73) Patentinhaber: **AGFA-GEVAERT Aktiengesellschaft,
D-5090 Leverkusen 1 (DE)**

(72) Erfinder: **Kluge, Reimund, Alfred-Lingg-Strasse 2,
D-8025 Unterhaching (DE)**
Erfinder: **Werner, Eberhard, Bergwerkstrasse 30,
D-8922 Peiting (DE)**

ACTORUM AG

## Beschreibung

Die Erfindung betrifft eine Vorrichtung zum Projizieren eines Kennzeichenbildes eines in zwei zueinander rechtwinkelig angeordneten Vorlagenebenen einsetzbaren Datenträgers auf einen in einer Kassette mit einem lichtdicht verschliessbaren Fenster befindlichen Film, mit einer Lichtquelle zur Beleuchtung des Datenträgers in jeder Vorlagenebene, einem in einem Winkel von 45° zu jeder Vorlagenebene angeordneten teildurchlässigen Spiegel und einer Abbildungsoptik, deren optische Achse auf der ersten Vorlagenebene senkrecht steht und durch die auch eine zweite, vom teildurchlässigen Spiegel reflektierte optische Achse definiert wird, die senkrecht zur zweiten Vorlagenebene steht.

Eine Vorrichtung der eingangs genannten Art ist beispielsweise aus der DE-OS 27 10 699 bekannt. Vorrichtungen dieser Art werden im allgemeinen zum Einbelichten von persönlichen Daten in eine Röntgenfilmkassette verwendet. Zu diesem Zweck können in der Vorrichtung ausserdem noch Mittel zum Öffnen eines Fensters vorgesehen sein, welches sich an einer Kassettenwand befindet und nur nach einer besonderen Entriegelung geöffnet werden kann.

In der Medizin ist es nun üblich, dass der Arzt eine Röntgenaufnahme stets so betrachtet, dass sich das Herz des Patienten auf der rechten Seite des Bildes befindet, also der Patient auf der Aufnahme von vorne betrachtet wird. Die Durchleuchtung des Patienten kann aber entweder vom Rücken zur Vorderseite erfolgen, wobei dies eine p-a-Aufnahme (postero-anterior) genannt wird oder von der Vorderseite zum Rücken, was dementsprechend mit einer a-p-Aufnahme (anteroposterior) bezeichnet wird. Die Einbelichtung der Patientendaten erfolgt vor oder nach der eigentlichen Röntgenaufnahme und ersetzt somit das umständliche Beschriften der Aufnahme nach der Entwicklung.

Damit nun der Arzt bei der Betrachtung der Aufnahme die Patientendaten in Abhängigkeit von einer a-p-Aufnahme oder p-a-Aufnahme seitenrichtig ablesen kann, ist in der oben genannten Druckschrift auch vorgeschlagen worden, den Datenträger an zwei verschiedenen Stellen bzw. Vorlagenebenen in die Vorrichtung einschieben zu können und einen gemeinsamen teildurchlässigen Spiegel vorzusehen, der das Bild des Datenträgers aus der einen Vorlagenebene auf die Filmebene projizierend hindurchlässt, das von der anderen Vorlagenebene in die Filmebene reflektiert.

Bei der bekannten Vorrichtung hat es sich nun gezeigt, dass die Beleuchtung der Datenträger in jeder Vorlagenebene höchst unbefriedigend ist, da das Licht in einem verhältnismässig schrägen Winkel auf die Vorlagenebene fällt und der Datenträger somit ungenügend ausgeleuchtet wird. Ausserdem ist die Lichtabschirmung der Beleuchtung etwas aufwendig, da zwei Beleuchtungsschlitze für jede Vorlagenebene vorgesehen werden den müssen.

Aufgabe der Erfindung ist es daher, eine Vorrichtung der eingangs genannten Art derart weiterzubilden, dass mit einfacheren Mitteln eine gleichmässige Ausleuchtung der Datenträger erreicht wird.

Diese Aufgabe wird durch die im Kennzeichen des Anspruchs 1 beschriebene Erfindung gelöst.

Mit der Erfindung wird erreicht, dass mit einer Lichtquelle und nur einem Beleuchtungsschlitz beide Vorlagenebenen gleichmässig ausgeleuchtet werden.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert ist. Es zeigen:

Fig. 1 einen Querschnitt durch die erfindungsgemässe Vorrichtung; und

Fig. 2a und 2d Darstellungen von zwei verschiedenen Einbelichtungsbeispielen.

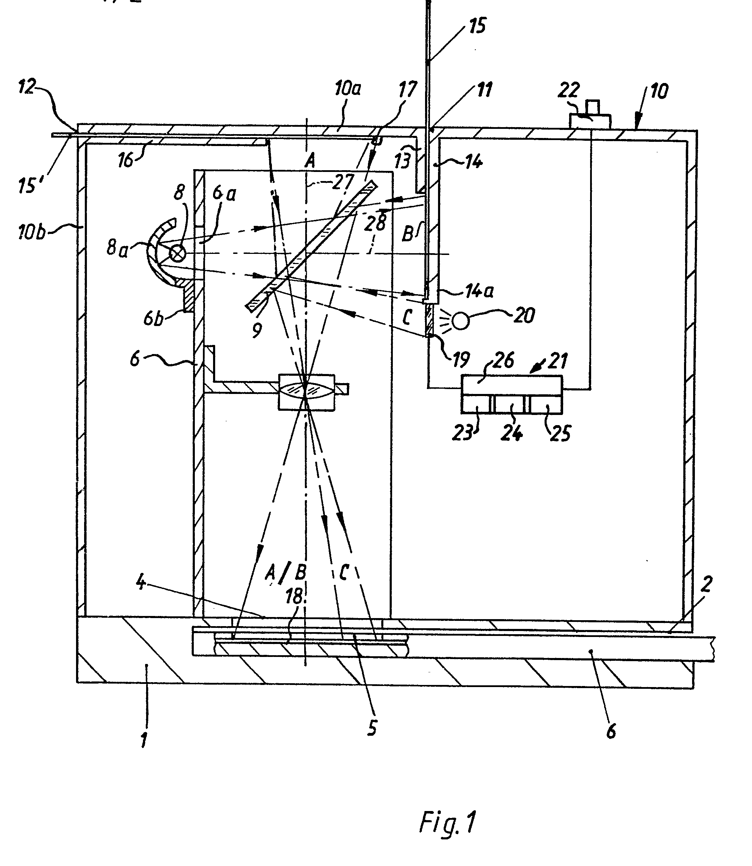

In Fig. 1 ist mit 1 ein Boden der erfindungsgemässen Vorrichtung bezeichnet, in welchem ein Einschnitt 2 zur Aufnahme einer Röntgenfilmkassette 3 ausgeformt ist. An der Oberseite des Bodens 1 ist ein Fenster 4 vorgesehen, das bei eingeschobener Kassette mit einem Fenster 5 in der Kassette 3 fluchtet. Um das Fenster 4 ist auf der Oberseite des Bodens 1 ein U-förmiger Träger 6 angeordnet, an welchem eine Abbildungsoptik 7, eine Lichtquelle 8 und ein teildurchlässiger Spiegel 9 gehaltert sind. Auf dem Boden 1 ist ferner ein Gehäuse 10 aufgesetzt, das zwei Einschnitte 11 und 12 aufweist. Der Einschnitt 11 ist auf der Oberseite 10a des Gehäuses 10 ausgeformt und weist zwei nach innen gerichtete Führungsflächen 13 und 14 auf, welche einen eingeschobenen Datenträger 15 halten. Die Führungsfläche 13 ist kürzer als die Führungsfläche 14, womit bei eingesetztem Datenträger 15 ein Teil von diesem freiliegt und eine Vorlagenebene für den Datenträger bildet. Am Ende der Führungsfläche 14 ist ein Anschlag 14a ausgeformt, durch welchen der Einschubweg des Datenträgers 15 begrenzt wird.

Der an einer Seitenwand 10b des Gehäuses 10 ausgeformte Schlitz 12 liegt unmittelbar unter der Oberseite 10a, so dass diese eine der Führungsflächen bildet. Eine dazu parallele zweite Führungsfläche 16 erstreckt sich parallel zur Oberseite 10a und ist in ihrer Länge ebenfalls so bemessen, dass ein Teil eines eingeschobenen Datenträgers 15' nicht bedeckt wird und eine zweite Vorlagenebene bildet. An der Innenfläche der Oberseite 10a ist ebenfalls ein kleiner Anschlag 17 zur Begrenzung des Einschubweges des Datenträgers 15' angebracht. Im übrigen können zur besseren Lichtabdichtung die Führungsflächen 13 und 14 bzw. 10a und 16 mit einem feinen Plüschbelag belegt sein.

In dem U-förmigen Träger 6 ist ein Beleuchtungsschlitz 6a ausgeformt und die Lichtquelle 8 ist hinter diesem Schlitz 6a ausserhalb des U-förmigen Schachtes angeordnet. Ein an einem Träger 6b befestigter Parabolspiegel 8a wirft das nach hinten strahlende Licht der Lichtquelle 8 durch den Schlitz 6a in das Innere des U-förmigen Schachtes.

In Fig. 1 ist die Vorlagenebene bzw. die durch die Führungsfläche 16 freigelassene Stelle vor dem Datenträger 15' mit A bezeichnet, wogegen die Vorlagenebene bzw. die von der Führungsfläche 13 freigelassene Stelle des Datenträgers 15 mit B bezeichnet ist. Die Vorlagenebene A liegt auf der optischen Achse 27 der Optik 7, auf welcher auch der teildurchlässige Spiegel 9 in einem Winkel von etwa 45° angeordnet ist. Die Lichtquelle 8 liegt mit dem Spiegel 8a auf der optischen Achse 28, welche von der Vorlagenebene B ausgeht und die optische Achse 27 im teildurchlässigen Spiegel 9 im rechten Winkel schneidet. Das von Lichtquelle 8 kommende Licht wird nun zum Teil am Spiegel 8 reflektiert und auf die Vorlagenebene A geworfen und durchdringt zum anderen Teil den Spiegel 9 und beleuchtet so die Vorlagenebene B. Die von der Vorlagenebene A reflektierten Strahlen treten durch den teildurchlässigen Spiegel 9 hindurch und werden von der Optik 7 auf einen Film 18 in der Kassette 3 projiziert. Das in einem Winkel von 90° zur Vorlagenebene A angeordnete Kennzeichenbild des Datenträgers 15 in der Vorlagenebene B wird von dem Spiegel 9 reflektiert und gelangt über die Optik 7 auf dem Film 18. Somit wird das Kennzeichenbild von dem Datenträger 15 in der Vorlagenebene B umgekehrt auf den Film 18 projiziert.

In einer Ausgestaltung der Erfindung kann neben der Vorlagenebene B eine Anzeigenleiste 19 aus Mehrsegment-Elementen angeordnet sein. Bei dieser Anzeigenleiste handelt es sich beispielsweise um zwölf neben- bzw. übereinander angeordnete Flüssigkristall-Elemente, welche von einer Lichtquelle 20 durchstrahlt werden. Die Lichtquelle 20 ist bezogen auf den teildurchlässigen Spiegel 9 auf der anderen Seite der Anzeigenleiste angeordnet und hat vorzugsweise eine der Leiste 19 entsprechende längliche Form. Das Bild C der Anzeigenleiste 19, das etwa in der gleichen Ebene wie die Vorlagenebene B liegt, wird von einem freien Bildrand des teildurchlässigen Spiegels 9 ebenfalls auf den Film 18 als neben den Bereichen A bzw. B liegender Bereich C projiziert.

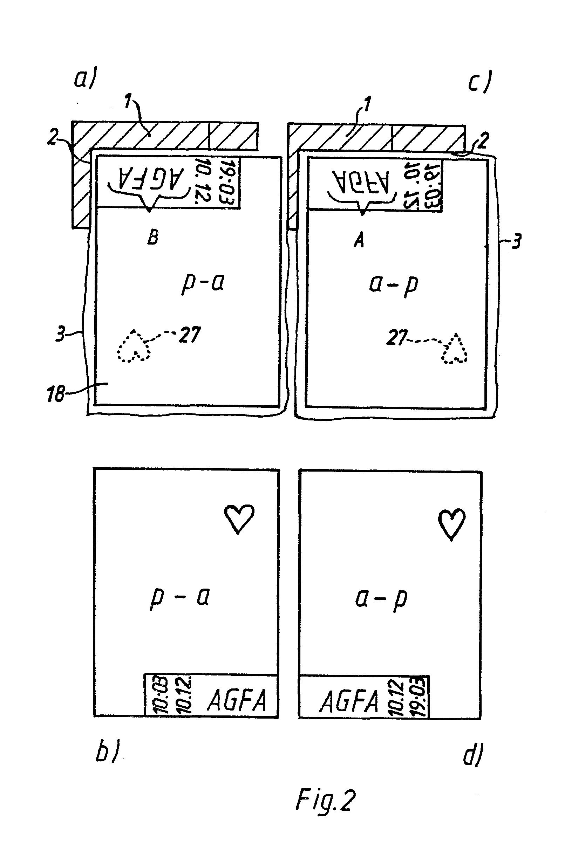

Die Flüssigkristall-Anzeige 19 steht steht ferner mit einer Steuereinrichtung 21 in Verbindung, welche über eine ausserhalb des Gehäuses 1 angeordnete Tastatur 22 betätigbar ist. Die Steuereinrichtung 21 kann zum einen eine elektronische Digitaluhr 23, eine elektronische Datumsangabe 24 sowie auf besondere Vorgänge einstellbare Buchstaben- oder Zahlencodereihe 25 aufweisen. Ferner ist in der Steuerung 21 eine Umkehrstufe 26 vorgesehen, welche in Abhängigkeit von p-a- bzw. a-p-Aufnahmen das reflektierte seitenverkehrte Bild der Anzeige auf dem Film umkehrt. Es ist dabei davon auszugehen, dass die Bildwiedergabe auf dem Film 18 neben dem Kennzeichenbild der Patientendaten um 90° verdreht angeordnet ist, wie in Fig. 2 dargestellt ist.

In Fig. 2 sind Beispiele der Einbelichtungsmöglichkeiten wiedergeben. In Fig. 2a ist die Kassette 3 dargestellt, welche in der erfindungsgemässen Vorrichtung in den Schlitz 2 zum Zwecke der Einbelichtung eingeführt ist. Zur besseren Übersichtlichkeit ist die Grafik der einzelnen Darstellungen unmittelbar auf der Kassette aufgetragen. Mit der Darstellung des auf dem Kopf stehenden Herzens 27 auf dem Film 18 bei Betrachtung des Filmes von der Einstrahlseite her kann auf eine p-a-Aufnahme geschlossen werden, das heisst, der Patient wurde vom Rücken nach vorne durchstrahlt. Die Unterseite der Kassette wird ebenfalls mit der Einstrahlseite nach oben in den Schlitz 2 der Vorrichtung gegeben und die Patientendatenkarte wird in den Schlitz 11 der Vorrichtung gesteckt, so dass das Kennzeichenbild aus dem Bereich B über die Reflexion am Spiegel 9 auf den Film projiziert wird.

Neben dem Kennzeichenbild B werden in vertikaler Ausrichtung die gewünschten Daten von der Anzeigenleiste 9 einbelichtet. Nach der Entwicklung stellt sich dann für den Betrachter das in Fig. 2b dargestellte Bild vor Augen, wobei davon auszugehen ist, dass der Betrachter eine Röntgenaufnahme stets so ansieht, als ob er den Patienten von vorne betrachten würde. In Fig. 2c handelt es sich um eine a-p-Aufnahme, bei der der Patient von vorne nach hinten durchstrahlt wird. Zur Einbelichtung wird die Datenkarte 15' in den Schlitz 12 eingegeben und das Kennzeichenbild A wird aufgrund der mangelnden Reflexion durch den Spiegel 9 seitenverkehrt auf den Film einbelichtet. Die vom Bereich C kommenden Ziffern würden jedoch gemäss Fig. 2a zunächst durch die doppelte Umkehr an Spiegel 9 und Optik 7 lesbar auf den Film projiziert werden. Damit aber auch diese seitenverkehrt neben dem Datenbild A auf den Film projiziert werden können, werden die Mehrsegment-Anzeigen durch die Umkehrstufe 26 umgekehrt. Damit ergibt sich bei der Betrachtung der entwickelten Röntgenaufnahme gemäss Fig. 2d eine ebenfalls von vorne lesbare Einbelichtung von Patientendaten und zusätzlichen Daten von der Anzeigenleiste, wobei letztere auf der anderen Seite der Patientendaten stehen.

Mit der dargestellten Anzeige sind aber noch weitere Anwendungen möglich. Beispielsweise kann die aktuelle Uhrzeit abgeschaltet und auf eine Messzeit gemäss einer Stoppuhr umgeschaltet werden. Dies ist beispielsweise bei einer Reihe von Röntgenaufnahmen interessant, die in bestimmten Zeitintervallen gemäss dem Abbau von Kontrastmitteln etc. gemacht werden müssen. Statt Zeitangaben könnten aber auch fortlaufende Nummern der Röntgenaufnahmen. Codenummern über bestimmte Aufnahmekriterien etc. einbelichtet werden.

**Patentansprüche:**

1. Vorrichtung zum Projizieren eines Kennzeichenbildes eines in zwei zueinander rechtwinkelig angeordneten Vorlagenebenen (A, B) einsetzbaren Datenträgers (15) auf einen in einer Kassette (3) mit einem lichtdicht verschliessbaren Fenster befindlichen Film, mit einer Lichtquelle (8) zur Beleuchtung des Datenträgers in jeder Vorlagenebene, einem in einem Winkel von 45° zu jeder Vorlagenebene angeordneten teildurchlässigen Spiegel (9) und einer Abbildungsoptik (7), deren optische Achse (27) auf der ersten Vorlagenebene (A) senkrecht steht und durch die auch eine zweite, vom teildurchlässigen Spiegel (9) reflektierte optische Achse (28) definiert wird, die senkrecht zur zweiten Vorlagenebene (B) steht, dadurch gekennzeichnet, dass die Lichtquelle (8) auf der Verlängerung der zweiten optischen Achse (28) auf der der zweiten Vorlagenebene (B) gegenüberliegenden Seite des Spiegels (9) angeordnet ist.

2. Vorrichtung nach Anspruch 1, dadurch gekennzeichnet, dass die Lichtquelle (8) hinter einer Wand (6) angeordnet ist und die Beleuchtung der beiden Vorlagenebenen (A, B) durch einen in dieser Wand (6) ausgeformten Schlitz (6a) durch bzw. über den teildurchlässigen Spiegel (9) erfolgt.

3. Vorrichtung nach Anspruch 1 oder 2, dadurch gekennzeichnet, dass neben einer Vorlagenebene (B) eine Anzeigeneinheit (19) vorgesehen ist, deren Bild (C) neben dem Bild einer der beiden Vorlagenebenen (A oder B) auf dem Film (18) in dem Fenster (4) der Kassette (6) projizierbar ist.

4. Vorrichtung nach Anspruch 3, dadurch gekennzeichnet, dass die Anzeigeeinheit (19) eine Vielzahl von Mehrsegment-Elementen aufweist, welche mit einer Steuereinheit (21) in Verbindung steht.

5. Vorrichtung nach Anspruch 4, dadurch gekennzeichnet, dass die Mehrsegment-Elemente Flüssigkeitskristallanzeigen sind, welche von einer zweiten Lichtquelle (20) durchstrahlt werden.

6. Vorrichtung nach Anspruch 4 oder 5, dadurch gekennzeichnet, dass in der Steuereinrichtung (21) eine die einzelnen Zeichen der Mehrsegmente in ihrer Seitenlage umkehrende Umkehrstufe (26) vorgesehen ist.

**Revendications**

1. Dispositiv de projection de l'image d'un signe caractéristique d'un support de données (15), qui peut être introduit dans deux plans pour des originaux (A, B) disposés à angle droit l'un par rapport à l'autre, sur un film se trouvant dans une cassette (3) à fenêtre pouvant être fermée d'une manière étanche à la lumière, comprenant une source lumineuse (8) destinée à éclairer le support de données dans chaque plan pour des originaux, un miroir (9) semi-transparent faisant un angle de 45° avec chaque plan pour des originaux et une optique de reproduction d'images (7), dont l'axe optique (27) est perpendiculaire au premier plan pour des originaux (A) et par laquelle est également défini un second axe optique (28) qui est réfléchi par le miroir semitransparent (9) et qui est perpendiculaire au second plan pour des originaux (B), caractérisé en ce que la source lumineuse (8) est disposée dans le prolongement du second axe optique (28) du côté du miroir (9) opposé au second plan pour des originaux (B).

2. Dispositif suivant la revendication 1, caractérisé en ce que la source lumineuse (8) est disposée derrière une paroi (6) et l'éclairage des deux plans pour des originaux (A, B) s'effectue par une fente (6a) ménagée dans cette paroi (6), à travers ou par l'intermédiaire du miroir (9) semi-transparent.

3. Dispositif suivant l'une des revendications 1 ou 2, caractérisé en ce qu'à côté d'un plan pour des originaux (B) est prévue une unité d'affichage (19), dont l'image (C) peut être projetée sur le film (18) dans la fenêtre (4) de la cassette (6) à côté de l'image de l'un des deux plans pour des originaux (A ou B).

4. Dispositif suivant la revendication 3, caractérisé en ce que l'unité d'affichage (19) présente un grand nombre d'éléments à segments multiples, qui sont en liaison avec une unité de commande (21).

5. Dispositif suivant la revendication 4, caractérisé en ce que les éléments à segments multiples sont des affichages à cristal liquide, qui sont éclairés par une deuxième source lumineuse (20).

6. Dispositif suivant l'une des revendications 4 ou 5, caractérisé en ce que dans le dispositif de commande (21) est prévu un étage d'inversion (26) inversant dans leur position latérale les signes individuels des segments multiples.

**Claims**

1. A device for projecting a mark image of a data carrier (15) – which may be set in two copy planes (A, B) disposed at right angles to one another – onto a film disposed in a cassette (3) with a window which may be closed in a light-proof manner, comprising a light source (8) for illuminating the data carrier in each copy plane, a semi-reflecting mirror (9) disposed at an angle of 45° to each copy plane and an image lens (7), the optical axis (27) of which is perpendicular to the first copy plane (a) and by which a second optical axis (28) reflected by the semi-reflecting mirror (9) and perpendicular to the second copy plane (B) is also defined, characterized in that the light source (8) is situated on the extension of the second optical axis (28) on the side of the mirror (9) opposite the second copy plane (B).

2. A device according to Claim 1, characterized in that the light source (8) is disposed behind a wall (6) and the two copy planes (A, B) are illuminated through a slot (6a) formed in the said wall (6) through or by way of the semireflecting mirror (9).

3. A device according to Claim 1 or 2, characterized in that a display unit (19), whose image (C) may be projected by the side of the image of one of the two copy planes (A or B) in the window (4) of the cassette (6), is provided by the side of one copy plane (B).

4. A device according to Claim 3, characterized in that the display unit (19) comprises a plurality of multi-segment elements which are connected to a control unit (21).

5. A device according to Claim 4, characterized in that the multi-segment elements are liquid crystal displays through which pass a second light source (20).

6. A device according to Claim 4 or 5, characterized in that a reversal stage (26) which reverses the individual signs of the multiple segments in their lateral position is provided in the control de-vice (21).

1/2

Fig.1

2/2

Fig.2